# EUROPEAN PATENT SPECIFICATION

(11) **EP 3 343 712 B1**
(45) Date of publication and mention of the grant of the patent: **13.02.2019**
(21) Application number: 17202825.0
(22) Date of filing: 21.11.2017
(51) Int. Cl.: H02B 13/00

(54) **CAP FOR CLOSING AN ELECTRICAL BUSHING**
KAPPE ZUM VERSCHLIESSEN EINER ELEKTRISCHE DURCHFÜHRUNG
CAPUCHON DESTINÉ À FERMER UNE TRAVERSÉE ÉLECTRIQUE

(30) Priority: 27.12.2016 BE 201605985
(43) Date of publication of application: 04.07.2018
(73) Proprietor: Het Veer, 9000 Gent (BE)
(72) Inventor: VANDOORNE, Rik, 9000 Gent (BE)
(74) Representative: Gevers Patents

(56) References cited:
- EP-A1- 1 339 145
- WO-A1-2013/060517

## Description

### Field of the invention

The present invention relates to a cap for closing an electrical bushing of an electrical switchgear.

### Background of the invention

Power stations generate high-voltage power (typically up to 380.000 V). The high-voltage power is dispatched to transformer stations where it is transformed into medium-voltage power (typically between 3.000 and 36.000 V). The medium-voltage power is then geographically distributed. When the medium-voltage power enters residential areas or industrial facilities, it is handled in a medium-voltage electrical system that transforms it into low-voltage power (typically less than 1000 V). The medium-voltage electrical system may have security and measurement functions. The medium-voltage electrical system comprises one or several electrical switchgears, which may be identical. The electrical switchgears typically contain a recipient with insulating gas, for example SF₆, dry air, nitrogen or another gas or combination of gasses.

When a need occurs to extend a medium-voltage electrical system with an additional electrical switchgear, this additional electrical switchgear has to be electrically connected through its external connection device to an identical external connection device of an already-installed electrical switchgear. Each external connection device typically comprises one or three electrical bushings into a side plate of the electrical switchgear. Each electrical bushing comprises a hole and a switchgear plug.

When there is no actual need for extension with an additional electrical switchgear, the electrical bushing(s) should be closed, to avoid a dielectric flashover creating an electric arc. This closing reduces the risk of accident and makes the electrical switchgear safer for people coming close to it.

Document EP1339145B1 discloses a cap to close an electrical bushings of an electrical switchgear. This known cap comprises an isolating part fitted internally with a conductive stiffening means formed by a metallic socket. An electrical contact between the switchgear plug and the stiffening means is provided by a contacting part formed by a small protuberance. This contacting part is made of semiconductor material and passes through a hole at the bottom of the stiffening means. This contacting part aims at bringing the metallic socket at the same potential as the terminal. Document EP1339145B1 states that this contacting part "shall be flexible material" without mentioning the material. Document EP1339145B1 does not describe how the contacting part is fixed to the other parts of the cap.

This disclosed cap has several problems. First, it is unclear how the contacting part is fixed to the other parts of the cap. In view of Figure 4 of document EP1339145B1, the contacting part is part of the isolating part, but the contacting part would be isolating and not semi-conductive in such a case.

Second, assuming that the contacting part is semi-conductive as written in the text of EP1339145B1, its resistivity can be pretty high.

Third, either the hole in the bottom of the metallic socket has exactly the dimensions of the contacting part and their assembly is difficult, or the hole in the bottom of this metallic socket is larger than the contacting part, and the electrical contact between them is poor. In this last case, a high electrical resistance is present at the junction between the contacting part and the metallic socket. Due to this resistance, the electric field is not properly distributed inside the metallic socket, which creates partial discharges. Such partial discharges decrease the lifetime of the device.

### Summary of the invention

An object of the invention is to provide a cap comprising a conductive cap stiffening means and a contacting part and which is robust, easy-to-assemble and which can provide a good electrical contact between the switchgear plug and the cap stiffening means. The invention provides a cap for closing an electrical bushing of an external connection device of an electrical switchgear and comprising:
- a flexible insulating part configured to be at least partially received in said electrical bushing and comprising a non-through hole, and
- a conductive cap stiffening means located inside the non-through hole, mechanically coupled to the insulating part, and comprising a tubular part for receiving a switchgear plug of the electrical bushing, characterized in that the cap stiffening means comprises an extension:
   - electrically and mechanically coupled to the tubular part,
   - located at least partially inside a geometrical contour defined by an infinitely long cylinder extending the tubular part,
   - arranged to electrically contact said switchgear plug when said switchgear plug is inserted into the cap stiffening means.

In the invention, the electrical contact between the switchgear plug and the cap stiffening means is achieved by a contacting part formed by an extension of the cap stiffening means itself. The fixing of this contacting part to the insulating part is therefore easy since it is fixed to the insulating part together with the tubular part. This makes the assembly of the cap especially easy and reliable.

The extension and the tubular part are parts of the same conductive piece, i.e., the cap stiffening means. This configuration provides a reliable and low-resistance electrical contact between the extension and the tubular part of the cap stiffening means. It provides also a reliable and low-resistance electrical contact between the switchgear plug and the tubular part of the cap stiffening means. It therefore insures that the tubular part and the switchgear plug are at the same electrical potential. The tubular part can thus form an efficient guide for the electric field, which properly distributes the electric field to reduce the risk of partial discharges. The cap stiffening means is preferably metallic.

The cap can also be called a "dummy plug".

Preferably, the extension is fixed to the tubular part. More preferably, the tubular part and the extension are parts of a single piece of electrically conductive material.

The infinitely long cylinder is preferably, but not necessarily, a right circular cylinder. The infinitely long cylinder can be seen as a surface circumscribing the tubular part.

The extension can be called an "internal extension" since it extends internally with respect to the infinitely long cylinder.

The tubular part has preferably a cylindrical shape symmetric with respect to a cap axis.

The flexible insulating part provides a good dielectric strength, especially when compressed in an electrical bushing. In other words, the flexible insulating part provides an especially high value for the maximum electric field that the cap can withstand.

Preferably, the extension is elastically flexible.

This makes possible to accommodate for the position of the switchgear plug and improves the electrical contact between the switchgear plug and the extension since the switchgear plug can be pressed against the extension. Considering that the direction of insertion of the switchgear plug is globally parallel to the cap axis, the extension is preferably elastically flexible at least in a direction parallel to the direction of insertion of the switchgear plug.

Preferably, the tubular part comprises a spring, more preferably, the tubular part is a spring.

Bending of the cap might be required, for example if the mounting is not done in a proper way. Using a spring makes possible to deform the cap stiffening means, and thus the cap, in direction perpendicular to the cap axis.

In an embodiment of the invention, the spring and the extension are made of a same conductive wire.

The conductive wire comprises a first part which is coiled to form the spring of the tubular part and a second part which forms the extension. This makes the cap stiffening means especially solid.

In an embodiment of the invention, the conductive wire has a diameter between 1 and 2 mm.

Preferably, the insulating part internal dimension and the tubular part external dimension are such that the cap stiffening means is mechanically blocked into the non-through hole.

In an embodiment of the invention, the cap stiffening means comprises nonmagnetic stainless steel.

Preferably, the insulating part comprises an elastomer. More preferably, the insulating part comprises silicone or ethylene propylene diene monomer (EPDM) rubber.

The cap can be a temporary electrical closing for the electrical switchgear since it is easily removable from the electrical switchgear. The cap can also be a permanent electrical closing for the electrical switchgear.

After removal of the cap, a second electrical switchgear can be electrically connected to the first electrical switchgear.

In an embodiment of the invention, the cap comprises a single extension located at a first end of the tubular part.

In another embodiment of the invention, the cap comprises two extensions, each of the two extensions being located at one of a first and a second ends of the tubular part. Preferably, the two extensions are prolongations of the conductive wire that forms the spring of the tubular part. Preferably, the two extensions are such that the cap stiffening means is symmetric. Like that, the cap stiffening means cannot be inserted in the non-through hole in wrong way.

In an embodiment of the invention, the extension comprises a first part which extends, from the tubular part, towards the inside of the infinitely long cylinder extending the tubular part and a second part which extends in a curved form from the first part.

The first part of the extension goes towards the inside of the infinitely long cylinder extending the tubular part. The first part is preferably substantially radial with respect to this cylinder. It can therefore be bent by a pressure applied by the switchgear plug. The second part may have the shape of a hook or the shape of a U. The curved form of the second part increases the range of accommodation to the position of the switchgear plug, especially when the switchgear plug is not installed exactly parallel to the cap axis.

Preferably, the second part of the extension extends to an axis of the infinitely long cylinder extending the tubular part in order to contact a tip of the switchgear plug.

In an embodiment of the invention, the extension extends in a curved form, preferably in a spiral form, from the tubular part. The spiral form is especially solid because it forms a smooth continuation with respect of the tubular part when the tubular part is a spring.

Preferably, the extension is arranged for contacting a traversal surface of the switchgear plug.

### Brief description of the figures

For a better understanding of the present invention, reference will now be made, by way of example, to the accompanying drawings in which:
- Figure 1 illustrates an exploded view of three caps in a first embodiment according to the invention,
- Figure 2 illustrates a cross sectional view of a cap in the first embodiment according to the invention,
- Figure 3 illustrates a cap stiffening means in the first embodiment according to the invention,
- Figure 4 illustrates a cross sectional view of a cap in a second embodiment according to the invention, and
- Figure 5 illustrates a cap stiffening means in the second embodiment according to the invention.

### Description of the invention

The present invention will be described with respect to particular embodiments and with reference to certain drawings but the invention is not limited thereto. The drawings described are only schematic and are nonlimiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

On the figures, identical or analogous elements may be referred by a same number.

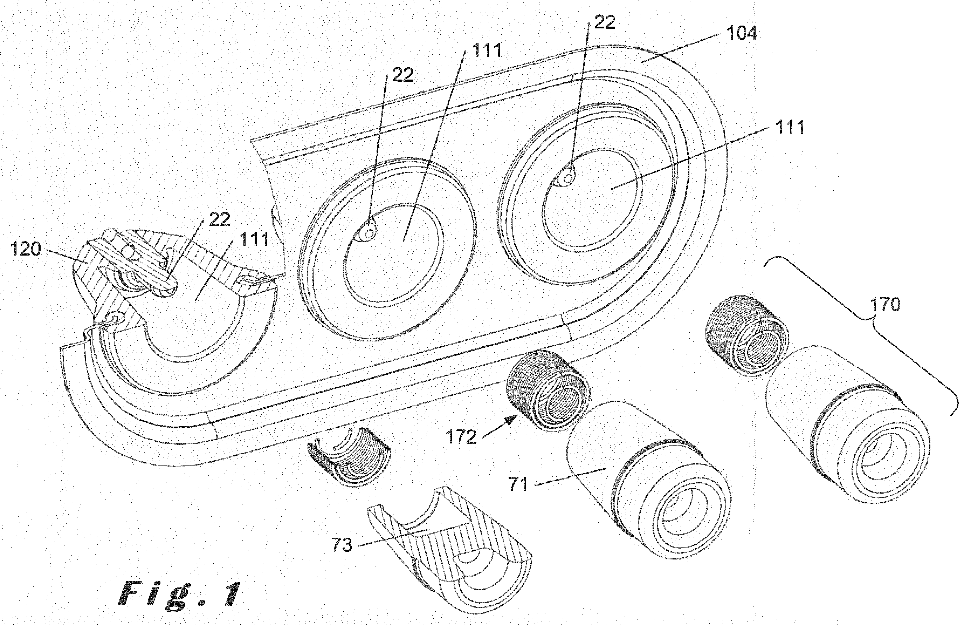

Figures 1 to 5 illustrate two embodiments of a cap 7, 170 according to the invention. The cap 7, 170 can be used to close an electrical bushing 120 of an external connecting device 104 of an electrical switchgear.

In the example illustrated at Figure 1, the external connecting device 104 comprises three electrical bushings 120. Each electrical bushing 120 comprises a hole 111 and a switchgear plug 22.

The electrical bushings 120 may have the shape of a truncated cone as illustrated on Figure 1. The electrical bushings 120 may be inner electrical bushings or outer electrical bushings with respect to the electrical switchgear.

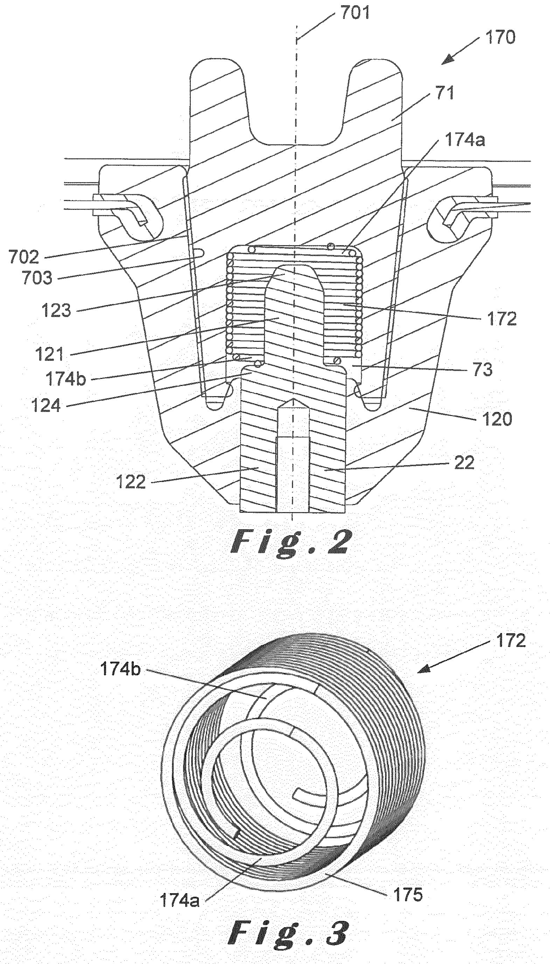

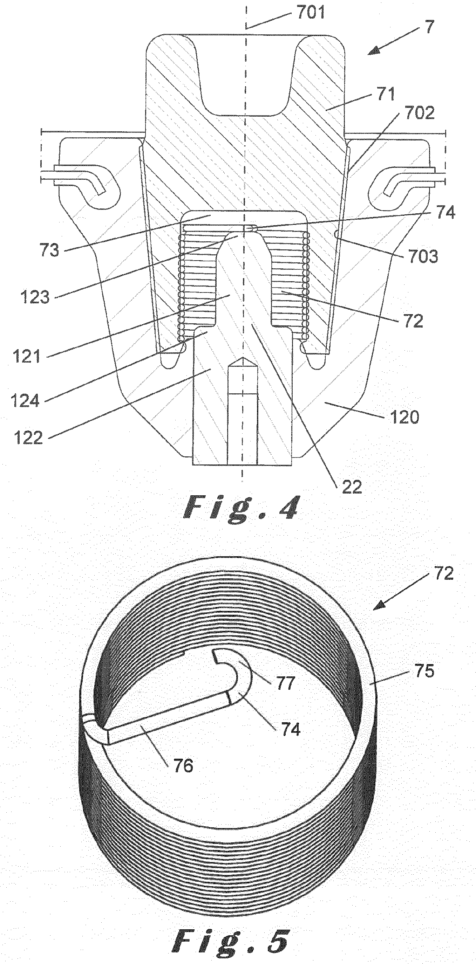

The cap 7, 170 has preferably a general axis, called the cap axis 701 (visible Figures 2 and 4). Some elements of the cap 7, 170 have a cylindrical symmetry with respect to the cap axis 701, some may not have it. The switchgear plug 22 is preferably inserted along the cap axis 701, but it might be tilted or shifted with respect to the cap axis 701, for example because of imperfections in the external connecting device 104.

The cap 7, 170 comprises a flexible insulating part 71 that is partially received in the hole 111. The insulating part 71 comprises a non-through hole 73. The non-through hole 73 is opened in the direction of the switchgear plug 22 and close is the opposite direction.

The insulating part 71 preferably comprises an elastomer, more preferably comprises silicone or ethylene propylene diene monomer (EPDM) rubber. The material of the sleeve has preferably a Young's modulus between 1 and 1000 MPa, more preferably between 10 and 100 MPa. Because of its flexibility, the insulating part 71 is able to withstand deformation. It is especially useful during the positioning of the cap 7, 170 in the electrical bushing. In Figures 2 and 4, the line 702 represents the shape of the insulating part 71 when it is outside of the electrical bushing 120, and the line 703 represents the shape of the insulating part 71 when it is positioned in the electrical bushing 120. The insulating part 71 is compressed when inserted in the electrical bushing 120, which improves the electrical isolation around the switchgear plug 22.

The cap 7, 170 also comprises a conductive cap stiffening means 72, 172 inserted in the non-through hole 73. The cap stiffening means 72, 172 preferably comprises a tubular part 75, 175 and an extension 74, 174a, 174b. The tubular part 75 is preferably a tubular spring. The extension 74, 174b contacts the switchgear plug 22 to obtain an electrical contact between them. It is possible, within the frame of the invention, that the extension 74 contacts any part of the switchgear plug 22.

The extension 74, 174a, 174b is located at least partially inside a geometrical contour defined by an infinitely long cylinder extending the tubular part 75. This infinitely long cylinder comprises the tubular part 75 and a virtual prolongation of the tubular part 75. The infinitely long cylinder has an axis, which is preferably the cap axis 701.

The extension 74, 174a, 174b is preferably formed by the same conductive wire as the spring of the tubular part 75, 175. In an embodiment of the invention, the conductive wire has a diameter between 1 and 2 mm, preferably has a diameter of 1.6 mm.

Preferably, the insulating part 71 internal diameter and the tubular part 75, 175 external diameter are such that the cap stiffening means 72, 172 is mechanically blocked into the non-through hole 73, for example because the tubular part 75, 175 external diameter is equal to or just lower than the internal diameter of the insulating part 71. These dimensions are chosen in such a way that the cap stiffening means 72, 172 can be manually inserted into the non-through hole 73.

In an embodiment of the invention, the internal diameter of the insulating part 71 (which is the diameter of the non-through hole 73) is 32 mm; the external diameter of the tubular part 75, 175 is 32 mm and the internal diameter of the tubular part 75, 175 is 28.8 mm.

In an embodiment of the invention, the cap stiffening means 72, 172 is metallic. In an embodiment of the invention, the cap stiffening means 72, 172 comprises nonmagnetic stainless steel, preferably is made of nonmagnetic stainless steel. In an embodiment of the invention, the conductive wire included in the tubular part 75, 175 and the extension 74, 174a, 174b is made of nonmagnetic stainless steel.

As visible on Figures 2 and 4, the switchgear plug 22 may comprise a wide part 122 attached to the switchgear and a narrow part 121 attached to the wide part 122. The narrow part 121 ends with a tip 123. Since the narrow part 121 is narrower than the wide part 122, the wide part 122 comprises an external transversal surface 124 designed to be essentially perpendicular to the cap axis 701.

Figures 1 to 3 illustrate the cap 170 in a first embodiment of the invention. In the first embodiment of the invention, the cap stiffening means 172 comprises a first and a second extensions 174a, 174b. The first extension 174a is located at a first end of the tubular part 175 and the second extension 174b is located at a second end of the tubular part 175, which is opposite to the first end. The first 174a and the second 174b extensions are preferably symmetrical, in such a way that the cap stiffening means 172 can be inserted in both ways into the non-through hole 73. Preferably, the extensions 174a, 174b extend in a curved form from the tubular part 175. For example, each of the extensions 174a, 174b can form a spiral which starts at the tubular part 75 and then converges with respect to the infinitely long cylinder extending the tubular part 75.

The dimensions of the tubular part 175 and the extensions 174a, 174b are preferably chosen in such a way that one of the extensions 174a, 174b contacts the traversal surface 124 of the switchgear plug 22, as visible on Figure 2. For example, the extensions 174a, 174b can extend up to a distance to an axis of the infinitely long cylinder extending the tubular part 175 slightly larger than half the diameter of the narrow part 121 of the switchgear plug 22. In an embodiment of the invention, the length of the tubular part 175 taken in a direction parallel to the cap axis 701 can be around 24 mm, the diameter of the tubular part 175 can be 32.3 mm and the extensions 174a, 174b can extend up to a distance to the axis of the infinitely long cylinder extending the tubular part 175 of 7.7 mm.

Figures 4 and 5 illustrate the cap 7 in a second embodiment of the invention. In the second embodiment of the invention, the cap stiffening means 72 comprises a single extension 74 which is located at a first end of the tubular part 75. This first end of the tubular part 75 is preferably the most inner end of the tubular part 75 inside the non-through hole 73, as visible on Figure 4. The extension 74 preferably extends to an axis of the cylinder extending the tubular part 75, in order to contact the tip 123 of the switchgear plug 22. The extension 74 preferably comprises a first part 76 which extends radially from the tubular part 75 towards the inside of the infinitely long cylinder extending the tubular part 75. The first part 76 of the extension goes towards the inside of the infinitely long cylinder extending the tubular part. The first part 76 is preferably substantially radial with respect to this cylinder. The extension 74 also preferably comprises a second part 77 which extends in a curved form from the first part 76. The second part 77 may have the shape of a hook or the shape of a U. It makes especially easy a bending of the extension 74 in the direction of the cap axis 701.

In other words, the invention relates to a cap 7 for closing one of the electrical bushings of an external connection device 104. The cap 7 comprises a flexible insulating part 71 configured to be at least partially received in said electrical bushing and comprising a non-through hole 73, and a conductive cap stiffening means 72 located inside the non-through hole 73 and comprising a tubular part 75 for receiving a switchgear plug 22 of the electrical bushing and an extension 74 arranged to electrically contact said switchgear plug 22 when said switchgear plug 22 is inserted into the cap stiffening means 72. The extension 74 is a contacting part creating an electrical contact between the switchgear plug 22 and the tubular part 75.

Although the present invention has been described above with respect to particular embodiments, it will readily be appreciated that other embodiments are also possible.

## Claims

1. Cap (7; 170) for closing an electrical bushing (120) of an external connecting device (104) of an electrical switchgear and comprising:
• a flexible insulating part (71) configured to be at least partially received in said electrical bushing (120) and comprising a non-through hole (73), and
• a conductive cap stiffening means (72; 172) located inside the non-through hole (73), mechanically coupled to the insulating part (71), and comprising a tubular part (75; 175) for receiving a switchgear plug (22) of the electrical bushing (120),
**characterized in that** the cap stiffening means (72; 172) comprises an extension (74; 174a; 174b):
• electrically and mechanically coupled to the tubular part (75; 175),
• located at least partially inside a geometrical contour defined by an infinitely long cylinder extending the tubular part (75; 175),
• arranged to electrically contact said switchgear plug (22) when said switchgear plug (22) is inserted into the cap stiffening means (72; 172).

2. Cap (7; 170) according to claim 1, **characterized in that** the extension (74; 174a; 174b) is elastically flexible.

3. Cap (7; 170) according to any of the preceding claims, **characterized in that** the tubular part (75; 175) comprises a spring.

4. Cap (7; 170) according to the preceding claim, **characterized in that** the tubular part (75; 175) is a spring.

5. Cap (7; 170) according to claim 3 or 4, **characterized in that** the spring and the extension (74; 174a; 174b) are made of a same conductive wire.

6. Cap (7; 170) according to the preceding claim, **characterized in that** the conductive wire has a diameter between 1 and 2 mm.

7. Cap (7; 170) according to any of the preceding claims, **characterized in that** the insulating part (71) internal dimension and the tubular part (75; 175) external dimension are such that the cap stiffening means (72; 172) is mechanically blocked into the non-through hole (73).

8. Cap (7; 170) according to any of the preceding claims, **characterized in that** the cap stiffening means (72; 172) comprises nonmagnetic stainless steel.

9. Cap (7; 170) according to any of the preceding claims, **characterized in that** the insulating part (71) comprises an elastomer, preferably silicone or ethylene propylene diene monomer (EPDM) rubber.

10. Cap (7; 170) according to any of the preceding claims, **characterized in that** it comprises a single extension (74; 174a; 174b) located at a first end of the tubular part (75; 175).

11. Cap (7; 170) according to any of claims 1 to 9, **characterized in that** it comprises two extensions (174a; 174b), each of the two extensions (174a; 174b) being located at one of a first and a second ends of the tubular part (75; 175).

12. Cap (7; 170) according to any of the preceding claims, **characterized in that** the extension (74) comprises a first part (76) which extends, from the tubular part (75), towards the inside of the infinitely long cylinder extending the tubular part (75) and a second part (77) which extends in a curved form from the first part (76) .

13. Cap (7; 170) according to the preceding claim, **characterized in that** the second part (77) of the extension (74) extends to an axis of the infinitely long cylinder extending the tubular part (75) in order to contact a tip (123) of the switchgear plug (22).

14. Cap (7; 170) according to any of claims 1 to 11, **characterized in that** the extension (174a; 174b) extends in a curved form, preferably in a spiral form, from the tubular part (175).

15. Cap (7; 170) according to the preceding claim, **characterized in that** the extension (174a; 174b) is arranged for contacting a traversal surface (124) of the switchgear plug (22).

## Patentansprüche

1. Kappe (7; 170) zum Verschließen einer elektrischen Durchführung (120) einer externen Verbindungsvorrichtung (104) eines elektrischen Schaltgeräts und umfassend:
- ein biegsames Isolierteil (71), das konfiguriert ist, um zumindest teilweise in der elektrischen Durchführung (120) aufgenommen zu werden und umfassend ein nicht durchgehendes Loch (73), und
- ein leitfähiges Kappenversteifungsmittel (72; 172), das sich innerhalb des nicht durchgehenden Lochs (73) befindet, mechanisch mit dem Isolierteil (71) gekoppelt ist, und ein rohrförmiges Teil (75; 175) zum Aufnehmen eines Steckers des Schaltgeräts (22) der elektrischen Durchführung (120) umfasst,
**dadurch gekennzeichnet, dass** das Kappenversteifungsmittel (72; 172) eine Verlängerung (74; 174a; 174b) umfasst, die:
- elektrisch und mechanisch mit dem rohrförmigen Teil (75; 175) gekoppelt ist,
- sich zumindest teilweise innerhalb einer geometrischen Kontur befindet, die durch einen unendlich langen Zylinder definiert ist, der das rohrförmige Teil (75; 175) verlängert,
- angeordnet ist, um den Stecker des Schaltgeräts (22) elektrisch zu kontaktieren, wenn der Stecker des Schaltgeräts (22) in das Kappenversteifungsmittel (72; 172) eingesetzt wird.

2. Kappe (7; 170) nach Anspruch 1, **dadurch gekennzeichnet, dass** die Verlängerung (74; 174a; 174b) elastisch biegsam ist.

3. Kappe (7; 170) nach einem der vorstehenden Ansprüche, **dadurch gekennzeichnet, dass** das rohrförmige Teil (75; 175) eine Feder umfasst.

4. Kappe (7; 170) nach dem vorstehenden Anspruch, **dadurch gekennzeichnet, dass** das rohrförmige Teil (75; 175) eine Feder ist.

5. Kappe (7; 170) nach Anspruch 3 oder 4, **dadurch gekennzeichnet, dass** die Feder und die Verlängerung (74; 174a; 174b) aus einem gleichen leitfähigen Draht hergestellt sind.

6. Kappe (7; 170) nach dem vorstehenden Anspruch, **dadurch gekennzeichnet, dass** der leitfähige Draht einen Durchmesser zwischen 1 und 2 mm aufweist.

7. Kappe (7; 170) nach einem der vorstehenden Ansprüche, **dadurch gekennzeichnet, dass** das Innenmaß des Isolierteils (71) und das Außenmaß des rohrförmigen Teils (75; 175) so sind, dass das Kappenversteifungsmittel (72; 172) mechanisch im nicht durchgehenden Loch (73) blockiert wird.

8. Kappe (7; 170) nach einem der vorstehenden Ansprüche, **dadurch gekennzeichnet, dass** das Kappenversteifungsmittel (72; 172) nichtmagnetischen Edelstahl umfasst.

9. Kappe (7; 170) nach einem der vorstehenden Ansprüche, **dadurch gekennzeichnet, dass** das Isolierteil (71) ein Elastomer umfasst, vorzugsweise Silikon oder Ethylen-Propylen-Dien-Monomer- (EPDM-) Kautschuk.

10. Kappe (7; 170) nach einem der vorstehenden Ansprüche, **dadurch gekennzeichnet, dass** sie eine einzige Verlängerung (74; 174a; 174b) umfasst, die sich an einem ersten Ende des rohrförmigen Teils (75; 175) befindet.

11. Kappe (7; 170) nach einem der Ansprüche 1 bis 9, **dadurch gekennzeichnet, dass** sie zwei Verlängerungen (174a; 174b) umfasst, wobei sich jede der zwei Verlängerungen (174a; 174b) an einem eines ersten und eines zweiten Endes des rohrförmigen Teils (75; 175) befindet.

12. Kappe (7; 170) nach einem der vorstehenden Ansprüche, **dadurch gekennzeichnet, dass** die Verlängerung (74) ein erstes Teil (76), das sich vom rohrförmigen Teil (75) zum Inneren des unendlich langen Zylinders, der das rohrförmige Teil (75) verlängert, erstreckt, und ein zweites Teil (77), das sich in einer gekrümmten Form vom ersten Teil (76) erstreckt, umfasst.

13. Kappe (7; 170) nach dem vorstehenden Anspruch, **dadurch gekennzeichnet, dass** sich das zweite Teil (77) der Verlängerung (74) zu einer Achse des unendlich langen Zylinders erstreckt, der das rohrförmige Teil (75) verlängert, um eine Spitze (123) des Steckers des Schaltgeräts (22) zu kontaktieren.

14. Kappe (7; 170) nach einem der Ansprüche 1 bis 11, **dadurch gekennzeichnet, dass** sich die Verlängerung (174a; 174b) in einer gekrümmten Form, vorzugsweise in einer Spiralform, vom rohrförmigen Teil (175) erstreckt.

15. Kappe (7; 170) nach dem vorstehenden Anspruch, **dadurch gekennzeichnet, dass** die Verlängerung (174a; 174b) angeordnet ist, um eine Querfläche (124) des Steckers des Schaltgeräts (22) zu kontaktieren.

## Revendications

1. Capuchon (7 ; 170) destiné à fermer une douille électrique (120) d'un dispositif de connexion externe (104) d'un appareillage de commutation électrique et comprenant :
• une partie isolante flexible (71) configurée pour être au moins partiellement reçue dans ladite douille électrique (120) et comprenant un trou non-traversant (73), et
• un moyen conducteur de raidissement de capuchon (72 ; 172) situé à l'intérieur du trou non-traversant (73), couplé mécaniquement à la partie isolante (71), et comprenant une partie tubulaire (75 ; 175) destinée à recevoir une fiche d'appareillage de commutation (22) de la douille électrique (120),
**caractérisé en ce que** le moyen de raidissement de capuchon (72 ; 172) comprend une extension (74 ; 174a ; 174b) :
• couplée électriquement et mécaniquement à la partie tubulaire (75 ; 175),
• située au moins partiellement à l'intérieur d'un contour géométrique défini par un cylindre infiniment long prolongeant la partie tubulaire (75 ; 175),
• agencée pour venir électriquement en contact avec ladite fiche d'appareillage de commutation (22) lorsque ladite fiche d'appareillage de commutation (22) est insérée dans le moyen de raidissement de capuchon (72 ; 172).

2. Capuchon (7 ; 170) selon la revendication 1, **caractérisé en ce que** l'extension (74 ; 174a ; 174b) est élastiquement flexible.

3. Capuchon (7 ; 170) selon l'une quelconque des revendications précédentes, **caractérisé en ce que** la partie tubulaire (75 ; 175) comprend un ressort.

4. Capuchon (7 ; 170) selon la revendication précédente, **caractérisé en ce que** la partie tubulaire (75 ; 175) est un ressort.

5. Capuchon (7 ; 170) selon la revendication 3 ou 4, **caractérisé en ce que** le ressort et l'extension (74 ; 174a ; 174b) sont constitués d'un même fil conducteur.

6. Capuchon (7 ; 170) selon la revendication précédente, **caractérisé en ce que** le fil conducteur a un diamètre entre 1 et 2 mm.

7. Capuchon (7 ; 170) selon l'une quelconque des revendications précédentes, **caractérisé en ce que** la dimension interne de la partie isolante (71) et la dimension externe de la partie tubulaire (75 ; 175) sont telles que le moyen de raidissement de capuchon (72 ; 172) est bloqué mécaniquement dans le trou non traversant (73).

8. Capuchon (7 ; 170) selon l'une quelconque des revendications précédentes, **caractérisé en ce que** le moyen de raidissement de capuchon (72 ; 172) comprend de l'acier inoxydable non magnétique.

9. Capuchon (7 ; 170) selon l'une quelconque des revendications précédentes, **caractérisé en ce que** la partie isolante (71) comprend un élastomère, de préférence un caoutchouc de silicone ou de monomère d'éthylène-propylène-diène (EPDM).

10. Capuchon (7 ; 170) selon l'une quelconque des revendications précédentes, **caractérisé en ce qu'**il comprend une extension unique (74 ; 174a ; 174b) située à une première extrémité de la partie tubulaire (75 ; 175).

11. Capuchon (7 ; 170) selon l'une quelconque des revendications 1 à 9, **caractérisé en ce qu'**il comprend deux extensions (174a ; 174b), chacune des deux extensions (174a ; 174b) étant située à l'une d'une première et d'une seconde extrémité de la partie tubulaire (75 ; 175).

12. Capuchon (7 ; 170) selon l'une quelconque des revendications précédentes, **caractérisé en ce que** l'extension (74) comprend une première partie (76) qui s'étend, depuis la partie tubulaire (75), vers l'intérieur du cylindre infiniment long prolongeant la partie tubulaire (75) et une seconde partie (77) qui s'étend sous une forme incurvée depuis la première partie (76).

13. Capuchon (7 ; 170) selon la revendication précédente, **caractérisé en ce que** la seconde partie (77) de l'extension (74) s'étend vers un axe du cylindre infiniment long prolongeant la partie tubulaire (75) afin de venir en contact avec un embout (123) de la fiche d'appareillage de commutation (22).

14. Capuchon (7 ; 170) selon l'une quelconque des revendications 1 à 11, **caractérisé en ce que** l'extension (174a ; 174b) s'étend sous une forme incurvée, de préférence sous forme de spirale, à partir de la partie tubulaire (175).

15. Capuchon (7 ; 170) selon la revendication précédente, **caractérisé en ce que** l'extension (174a ; 174b) est agencée pour venir en contact avec une surface de traversée (124) de la fiche d'appareillage de commutation (22).
